# EUROPEAN PATENT APPLICATION

(11) **EP 1 571 134 A1**
(43) Date of publication of application: **07.09.2005**
(21) Application number: 03812309.7
(22) Date of filing: 26.11.2003
(51) Int. Cl.: C03C 27/06, H05B 6/80

(54) **PROCESS FOR PRODUCING VACUUM GLASS PANEL AND VACUUM GLASS PANEL PRODUCED THEREBY**

(30) Priority: 05.12.2002 JP 2002353836
(71) Applicant: Nippon Sheet Glass Company, Limited, Osaka 541-8559 (JP)
(72) Inventor: YOSHIZAWA, Hideo Nippon Sheet Glass Company Ltd., Tokyo 105-8552 (JP)
(74) Representative: Uchida, Kenji
(86) International application number: PCT/JP2003/015112
(87) International publication number: WO 2004/050579

(57) **Abstract**

ABSTRACT A process for producing a vacuum glass panel in which at the bonding of a pair of opposite glass plates with a spacer interposed therebetween, not only deformation of the pair of glass plates but also any strength decrease thereof can be inhibited; and a vacuum glass panel produced by the process. Bonding of thermally tempered sheet glass members (13, 17) is carried out by first disposing thermally tempared sheet glass members (13, 17) piled one upon the other on panel supports (58), subsequently heating the whole of thermally tempered sheet glass members (13, 17) to given temperature, for example, 150°C or higher, preferably 200 to 300°C and thereafter effecting local heating of peripheral edge portions of the thermally tempered sheet glass members (13, 17) with the use of irradiation unit (59) capable of emitting radio-frequency radiation so that columnar projections (16) are selectively heated and re-fused. At the local heating, compressed air from nozzle (60) is applied to the peripheral edge portions of the thermally tempered sheet glass plates (14, 18) so as to cool the same.

## Description

### Technical Field

The present invention relates to a vacuum glass panel manufacturing method and a vacuum glass panel manufactured by the manufacturing method, and more particularly to a vacuum glass panel manufactured using thermally tempered glass and a manufacturing method therefor.

### Background Art

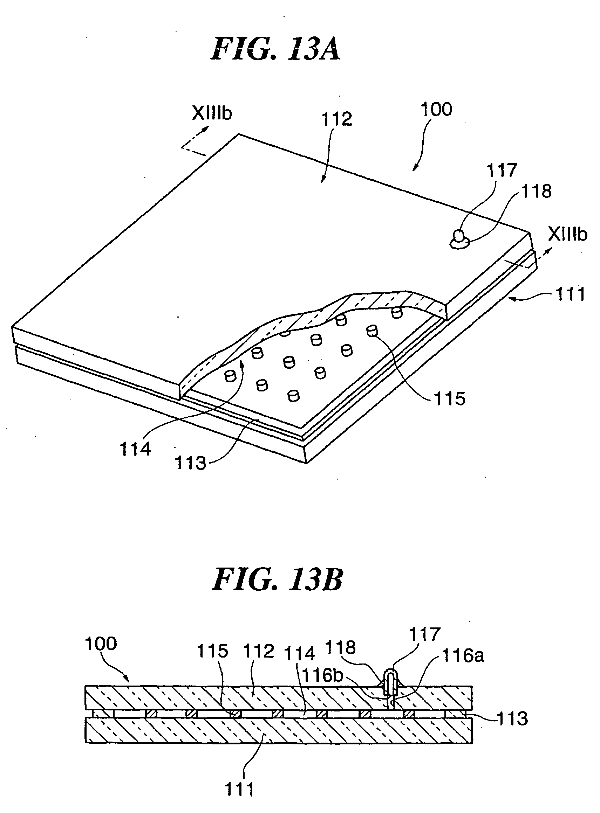

FIGS. 13A and 13B are views schematically showing the structure of a conventional vacuum glass panel, in which FIG. 13A is a perspective view, and FIG. 13B is a cross-sectional view taken on line XIIIb-XIIIb in FIG. 13A.

As shown in FIGS. 13A and 13B, the conventional vacuum glass panel 100 is comprised of a pair of thermally tempered glass plates 111 and 112 opposed to each other in a face-to-face fashion to define a hollow layer 114 therebetween and having respective outer peripheral edges thereof hermetically joined to each other via a sealing low-melting-point glass 113, and generally cylindrical spacers 115 arranged in a matrix shape on the surfaces of the thermally tempered glass plates 111 and 112 and inserted in the hollow layer 114 as atmospheric pressure support members to determine spacing between the thermally tempered glass plates 111 and 112 (see e.g. Published Japanese Translation of PCT Application (Kohyo) No. H11-513015) .

As shown in FIG. 13B, the thermally tempered glass plate 112 has a through hole 116a and a counterbore 116b formed at an arbitrary location inward of a portion thereof joined to the thermally tempered glass plate 111 by the low-melting-point glass 113, so as to decompress the hollow layer 114 by a known method, and a glass tube 117 is inserted in the counterbore 116b from one surface (outer surface) of the thermally tempered glass plate 112, with a contact portion between the glass tube 117 and the thermally tempered glass plate 112 sealed by glass solder 118. Further, the outside air-side end of the glass tube 117 is sealed by a predetermined method.

The thermally tempered glass plates 111 and 112 are joined to each other via the low-melting-point glass 113 by arranging the spacers 115 on one surface (inner surface) of the thermally tempered glass plate 111 and applying the low-melting-point glass 113 on the outer peripheral edge thereof, then superposing the thermally tempered glass plate 112 on the thermally tempered glass plate 111 such that a surface (inner surface) of the thermally tempered glass plate 112 opposite to the outer surface thereof is opposed to the inner surface of the thermally tempered glass plate 111 having the low-melting-point glass 113 applied thereto, and melting the low-melting-point glass 113 by heating the outer peripheral edges of the thermally tempered glass plates 111 and 112 superposed one upon the other.

By the application of heat for joining the thermally tempered glass plates 111 and 112 by the low-melting-point glass 113, the thermally tempered glass plates 111 and 112 are also heated, which reduces section residual compressive stress in the thermally tempered glass plates 111 and 112, thereby causing degradation of the strength of the thermally tempered glass plates 111 and 112. To solve this problem, a method has been proposed in which the outer peripheral edges of the thermally tempered glass plates 111 and 112 are heated using microwave after heating of the whole of the thermally tempered glass plates 111 and 112 to approximately 200°C for the joining, so that only the low-melting-point glass 113 can be efficiently subjected to quick heating so that degradation of the strength of the thermally tempered glass plates 111 and 112 occurs only at the outer peripheral edges thereof, to thereby suppress degradation of the strength of the thermally tempered glass plates 111 and 112 (see e.g. International Publication No. WO 02/27135).

However, if the spacers 115 arranged on the inner surface of the thermally tempered glass plate 111 are displaced at the time of joining the thermally tempered glass plates 111 and 112 by the low-melting-point glass 113, the vacuum glass panel 100 will suffer from a fatal flaw. For this reason, in joining the thermally tempered glass plates 111 and 112, it is necessary to horizontally support the entire outer surface of the thermally tempered glass plate 111, and apply heat to the thermally tempered glass plates 111 and 112 such that the surfaces of the thermally tempered glass plates 111 and 112 have no temperature distribution and the thermally tempered glass plates 111 and 112 are slowly heated so as to minimize the temperature difference between the surfaces of each of the thermally tempered glass plates 111 and 112 to thereby prevent warpage of the thermally tempered glass plates 111 and 112 due to the temperature difference between the surfaces.

A general glass plate shows properties like those of an elastic member at a temperature not higher than the strain point of the glass, and hence when a portion of a flat glass plate is locally heated, the heated portion is about to expand, but a non-heated portion restrains the heated portion from expanding, which causes warpage of the glass plate. For example, when the outer peripheral edge of a flat rectangular glass plate is subjected to quick heating, the glass plate is suddenly elastically deformed and warped into an unstable saddle shape. For the same reason, when the outer peripheral edges of the thermally tempered glass plates 111 and 112 are subjected to quick heating so as to join the thermally tempered glass plates 111 and 112 by the low-melting-point glass 113, one or both of the thermally tempered glass plates 111 and 112 is/are warped into a saddle shape, which makes the width of the hollow layer 114 non-uniform and creates a portion wider than the height of the spacers 115. Pressure in the portion of the hollow layer 114 suddenly widened by the quick heating becomes lower than that in the other portion, and therefore ambient air is drawn into the suddenly widened portion, which causes the spacers 115 arranged in the hollow layer 114 to be displaced in directions in which the air flows. Thus, if an attempt is made to suppress degradation of the strength of the thermally tempered glass plates 111 and 112 at the time of joining them, the vacuum glass panel 100 is manufactured with the spacers 115 displaced from positions where they were originally arranged.

It is an object of the present invention to provide a vacuum glass panel manufacturing method which makes it possible to join a pair of glass plates opposed to each other via spacers while suppressing deformation of the pair of glass plates and suppressing degradation of the strength of the pair of glass plates, and a vacuum glass panel manufactured by the manufacturing method.

### Disclosure of Invention

To attain the above object, in a first aspect of the present invention, there is provided a method of manufacturing a vacuum glass panel, in which respective outer peripheral edges of a pair of glass plates opposed to each other via spacers are hermetically sealed, and an internal space within the pair of glass plates having the respective outer peripheral edges hermetically sealed is evacuated, comprising a protrusion forming step of forming a plurality of protrusions as the spacers on an inner surface of at least one of the pair of glass plates, and a sealing step of hermetically sealing the outer peripheral edges of the pair of glass plates by melting a low-melting-point glass layer whose melting temperature is lower than the melting temperature of the pair of glass plates, at the outer peripheral edges of the pair of glass plates.

According to the first aspect of the present invention, a plurality of protrusions are formed as spacers on the inner surface of at least one of a pair of glass plates, and a low-melting-point glass layer whose melting temperature is lower than that of the pair of glass plates is melted at the outer peripheral edges of the pair of glass plates to thereby hermetically seal the outer peripheral edges of the pair of glass plates. As a result, it is possible to join the pair of glass plates while suppressing deformation of the pair of glass plates and suppressing degradation of the strength of the pair of glass plates. Further, it is possible to prevent displacement of the spacers.

Preferably, at least one of the pair of glass plates is formed of tempered glass.

Preferably, the sealing step comprises melting the low-melting-point glass layer by local heating using microwave.

With this configuration, since the low-melting-point glass layer is melted by local heating using microwave to thereby hermetically seal the outer peripheral edges of the pair of glass plates, the local heating of the low-melting-point glass layer can be efficiently performed.

More preferably, the low-melting-point glass layer has a dielectric loss factor larger than the dielectric loss factor of the pair of glass plates, in the wavelength range of the microwave.

With this configuration, since the dielectric loss factor of the low-melting-point glass layer in the wavelength range of the microwave is larger than that of the pair of glass plates, it is possible to more efficiently perform the local heating of the low-melting-point glass layer.

More preferably, the microwave is oscillated by a gyrotron.

More preferably, the pair of glass plates are heated in their entirety to a predetermined temperature before the local heating of the low-melting-point glass layer is performed.

With this configuration, since the pair of glass plates are heated in their entirety to a predetermined temperature before local heating of the low-melting-point glass layer is performed, it is possible to suppress degradation of the vacuum degree of the hollow layer in the vacuum glass panel.

Further preferably, the predetermined temperature is not lower than 150°C.

Even more preferably, the predetermined temperature is 200 to 300°C.

More preferably, the outer peripheral edges of the pair of glass plates are cooled during the local heating of the low-melting-point glass layer.

With this configuration, since the outer peripheral edges of the pair of glass plates are cooled during the local heating of the low-melting-point glass layer, it is possible to further suppress deformation of the pair of glass plates and further suppress degradation of the strength of the pair of glass plates when the pair of glass plates are jointed to each other.

Further preferably, the outer peripheral edges of the pair of glass plates are forcibly cooled by air.

More preferably, a through hole is formed in one of the pair of glass plates, for evacuation, and the through hole is locally heated during the local heating of the outer peripheral edges of the pair of glass plates.

With this configuration, since the through hole for evacuation is locally heated during local heating of the outer peripheral edges of the pair of glass plates, degradation of the strength of the inner surface of the through hole can be suppressed.

More preferably, the evacuation is performed before the temperature of the pair of glass plates becomes not higher than 80 °C after the outer peripheral edges are hermetically sealed.

With this configuration, the evacuation is performed before the temperature of the pair of glass plates becomes not higher than 80 °C after the sealing of the outer peripheral edges, so that absorption of water and the like by the pair of glass plates can be suppressed, which makes it possible to suppress degradation of the vacuum degree of the hollow layer in the vacuum glass panel due to desorption of water and the like absorbed by the pair of glass plates.

Preferably, the sealing step comprises melting the low-melting-point glass layer by local heating using a laser beam.

With this configuration, since the low-melting-point glass layer is melted by local heating using a laser beam to thereby hermetically seal the outer peripheral edges of the pair of glass plates, the local heating of the low-melting-point glass layer can be efficiently performed.

More preferably, the low-melting-point glass layer has a light absorption index larger than the light absorption index of the pair of glass plates, in the wavelength range of the laser beam.

With this configuration, since the light absorption index of the low-melting-point glass layer is larger than that of the pair of glass plates, in the wavelength range of light for local heating, it is possible to more efficiently perform the local heating of the low-melting-point glass layer.

Also preferably, the sealing step comprises melting the low-melting-point glass layer by local heating using a light beam.

With this configuration, since the low-melting-point glass layer is melted by local heating using a light beam to thereby hermetically seal the outer peripheral edges of the pair of glass plates, the local heating of the low-melting-point glass layer can be efficiently performed.

Also preferably, the method comprises a low-melting-point glass layer forming step of forming the low-melting-point glass layer by applying glass paste onto an outer peripheral edge of an inner surface of one of the pair of glass plates and heating the applied glass paste.

More preferably, the one of the pair of glass plates having the glass paste applied thereto is formed of a glass other than tempered glass, and the low-melting-point glass layer forming step comprises subjecting the one of the pair of glass plates to thermal tempering to form the low-melting-point glass layer.

Also preferably, the difference between the coefficient of linear expansion of the low-melting-point glass layer and the coefficient of linear expansion of the pair of glass plates is in a range of 1.0 x 1/(10⁶ × K) at 0 to 500 °C.

With this configuration, since the difference between the coefficient of linear expansion of the low-melting-point glass layer and that of the pair of glass plates is in a range of 1.0 x 1/ (10⁶ x K) at 0 to 500 °C, it is possible to further suppress deformation of the pair of glass plates in joining thereof.

Also preferably, the protrusion forming step comprises applying low-melting-point glass paste in a matrix shape onto an inner surface of one of the pair of glass plates, and heating the applied low-melting-point glass paste to thereby cause the low-melting-point glass paste to be integrated with the one of the pair of glass plates.

With this configuration, a plurality of protrusions as spacers are formed integrally with one of the pair of glass plates by heating low-melting-point glass paste applied in a matrix shape onto the inner surface of the one of the pair of glass plates, so that displacement of the spacers can be reliably prevented.

More preferably, the low-melting-point glass paste is applied by a screen printing method.

More preferably, the low-melting-point glass paste is applied using a dispenser.

More preferably, the low-melting-point glass paste is applied by transfer using a plurality of needles.

More preferably, the one of the pair of glass plates having the low-melting-point glass paste applied thereto is formed of a glass other than tempered glass, and the protrusion forming step comprises subjecting the one of the pair of glass plates to thermal tempering.

More preferably, the low-melting-point glass paste contains low-melting-point glass whose softening temperature is lower than the softening temperature of the pair of glass plates.

More preferably, the tempered glass is thermally tempered glass.

More preferably, the tempered glass is chemically tempered glass.

In a second aspect of the present invention, there is provided a vacuum glass panel manufactured by the vacuum glass panel manufacturing method according to the first aspect of the present invention.

### Brief Description of Drawings

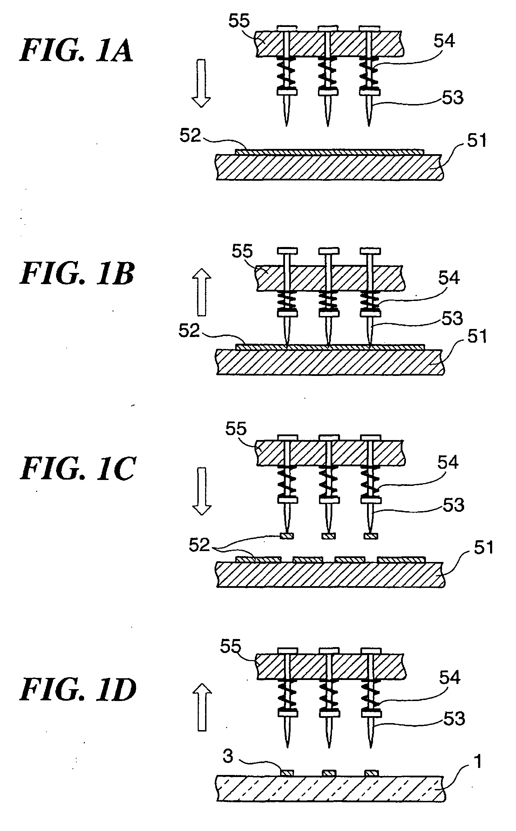

FIGS. 1A, 1B, 1C and 1D are views schematically illustrating steps of forming protrusions on a glass plate, in which:
   FIG. 1A illustrates a first step;
   FIG. 1B illustrates a second step;
   FIG. 1C illustrates a third step; and
   FIG. 1D illustrates a fourth step;
FIG. 2 is a view schematically illustrating a step of applying glass paste onto the glass plate;
FIG. 3 is a cross-sectional view of a through hole and a counterbore formed in the glass plate;
FIGS. 4A and 4B are views schematically showing a process for attaching a glass tube to the glass plate, in which:

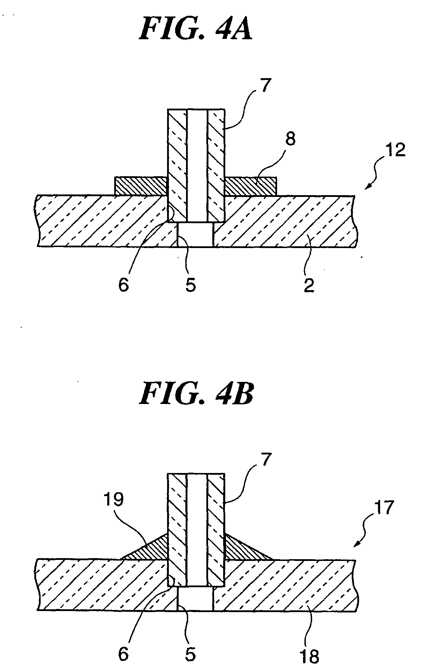

   FIG. 4A shows a state before the glass tube is joined to the glass plate; and
   FIG. 4B shows a state after the glass tube was joined to the glass plate;

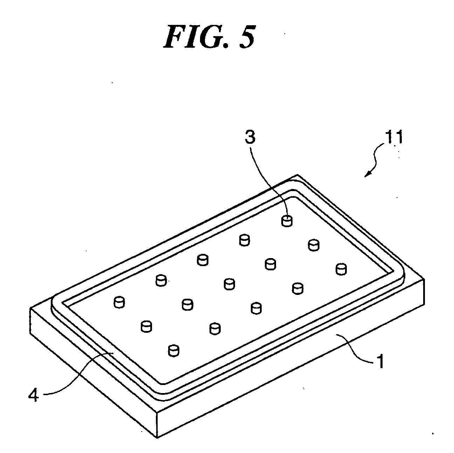

FIG. 5 is a perspective view schematically showing the structure of a glass plate assembly;

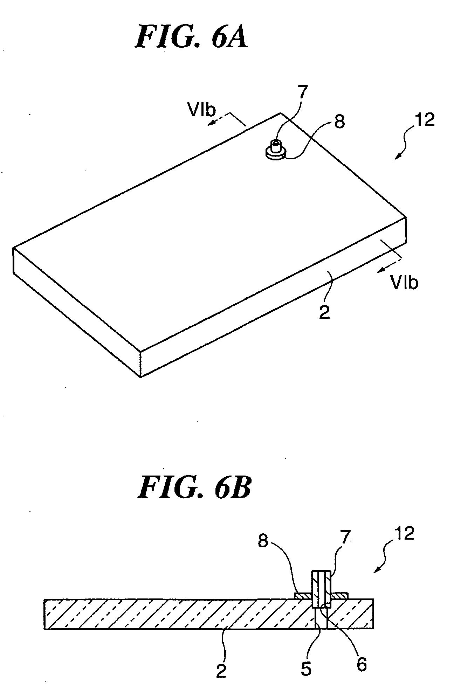

FIGS. 6A and 6B are views schematically showing the structure of the glass plate assembly, in which:
   FIG. 6A is a perspective view; and
   FIG. 6B is a cross-sectional view taken on line VIb-VIb in FIG. 6A;

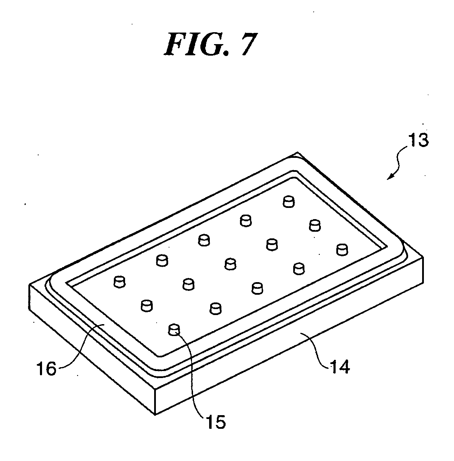

FIG. 7 is a perspective view schematically showing the structure of a thermally tempered glass plate assembly;

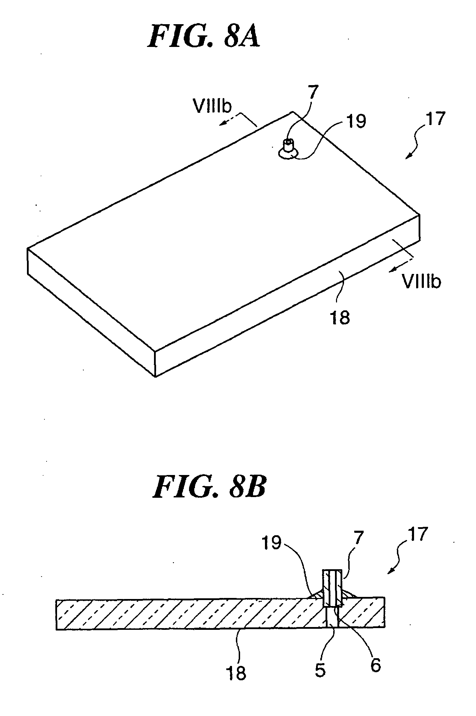

FIGS. 8A and 8B are views schematically showing the structure of the thermally tempered glass plate assembly, in which:
   FIG. 8A is a perspective view; and
   FIG. 8B is a cross-sectional view taken on line VIIIb-VIIIb in FIG. 8A;

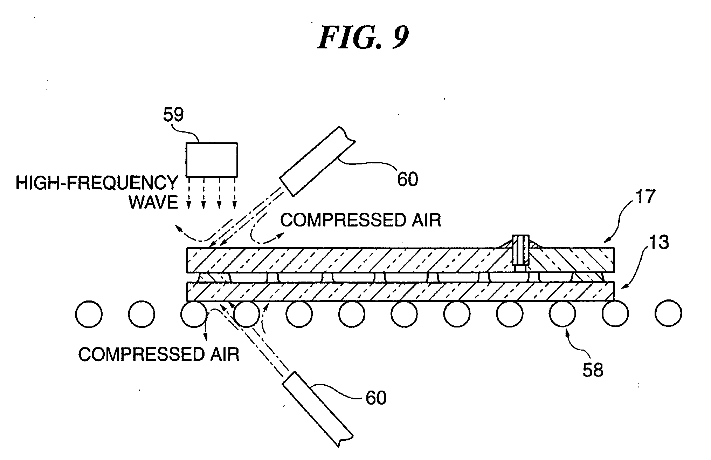

FIG. 9 is a view schematically showing steps of a process for joining the thermally tempered glass plate assembly shown in FIG. 7 and the thermally tempered glass plate assembly shown in FIGS. 8A and 8B;

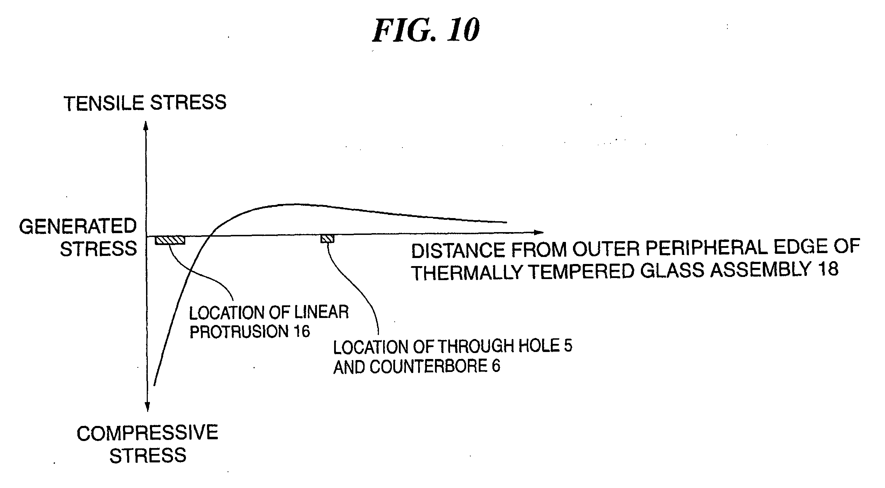

FIG. 10 is a diagram showing a distribution of stresses generated on a plane of a thermally tempered glass plate of the thermally tempered glass plate assembly shown in FIG. 8;

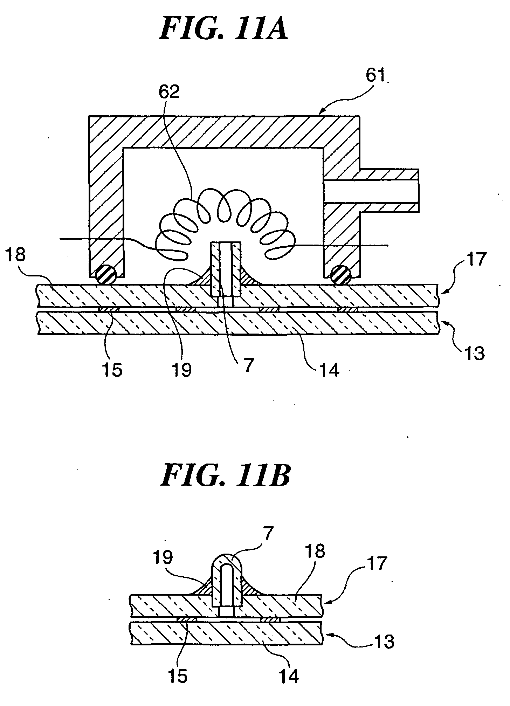

FIGS. 11A and 11B are views schematically illustrating steps of a process for joining the thermally tempered glass plate and a glass tube in the thermally tempered glass plate assembly 7 shown in FIG. 8, in which:
   FIG. 11A is a cross-sectional view of the thermally tempered glass plate assembly during the joining process; and
   FIG. 11B is a cross-sectional view of the thermally tempered glass plate assembly after the joining process;

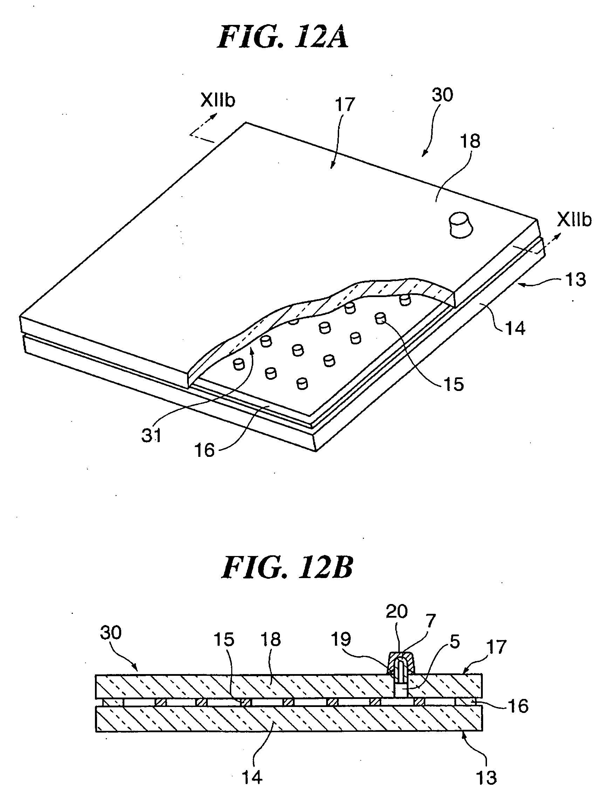

FIGS. 12A and 12B are views schematically showing the structure of a vacuum glass panel manufactured by the vacuum glass panel manufacturing method of the present invention, in which:
   FIG. 12A is a perspective view; and
   FIG. 12B is a cross-sectional view taken on line XIIb-XIIb in 12A; and
FIGS. 13A and 13B are views schematically showing the structure of a vacuum glass panel manufactured by a conventional vacuum glass panel manufacturing method, in which:
   FIG. 13A is a perspective view; and
   FIG. 13B is a cross-sectional view taken on line XIIIb-XIIIb in FIG. 13A.

### Best Mode for Carrying Out the Invention

The present invention will now be described in detail with reference to the drawings showing an embodiment thereof.

First, two glass base plates, not shown, formed of soda-lime glass and having a predetermined thickness e.g. of 3 mm are each cut to a predetermined size e.g. of 1200 mm x 900 mm, whereby a rectangular soda-lime glass plate 1 described in detail with reference to FIG. 5 and a rectangular soda-lime glass plate 2 described in detail with reference to FIGS. 6A and 6B, which are identical in shape and size to each other, are formed. Then, the edges of the respective glass plates 1 and 2 are polished so as to prevent fine glass powder from being generated during transfer in a tempering process, for tempering the glass plates 1 and 2 described in detail hereinafter.

Next, as shown in FIGS. 1A to 1D described in detail hereinafter, protrusions 3 are formed in a matrix shape on one surface (inner surface) of the glass plate 1, using glass paste containing low-melting-point glass frit. The protrusions 3 are fired to thereby form protrusions 15 having a generally truncated conical or bell-like shape, described in detail hereinafter with reference to FIG. 7, for holding thermally tempered glass plates 14 and 18 of a vacuum glass panel 30, described in detail hereinafter with reference to FIGS. 12A and 12B, with a predetermined space therebetween.

To form the glass paste into shapes on the inner surface of the glass plate 1, a method illustrated in FIGS. 1A to 1D has been proposed e.g. in Japanese Laid-Open Patent Publication (Kokai) No. 2001-264772. More specifically, glass paste 52 is applied onto a plate 51 to a predetermined thickness of e.g. 0.4 mm (FIG. 1A). A support plate 55, which is movably disposed vertically upward of the plate 51 in opposed relation thereto, with a plurality of needles 53 vertically movably disposed therein via elastic members 54, such as springs, is moved toward the plate 51 to bring the tips of the needles 53 into contact with the glass paste 52 (FIG. 1B), whereby the glass paste 52 is caused to adhere to the tip of each of the needles 53 in the form of a piece having a predetermined shape, e.g. a truncated conical shape whose bottom surface has a diameter of 0.45 mm (FIG. 1C). Then, the support plate 55 is moved vertically upward and moved horizontally to a position above the glass plate 1 which is placed in a flat shape. Then, the needles 53 are brought into contact with the inner surface of the glass plate 1 to transfer the glass paste 52 attached to the tip of each needle 53 onto the glass plate 1, thereby forming the protrusions 3 on the inner surface of the glass plate 1 (FIG. 1D) . This method makes it possible to form fine protrusions 3 on the inner surface of the glass plate 1 with dimensional accuracy and efficiency.

The method of forming the protrusions 3 on the inner surface of the glass plate 1 is not limited to the above-described one, but a screen printing method or a dispenser method can also be employed, for example. The screen printing method includes one disclosed in Japanese Laid-Open Paten Publication (Kokai) No. H11-314944, in which the glass plate 1 having protrusions 3 formed on the inner surface thereof is fired, as described in detail hereinafter, such that the protrusions 3 can become uniform in height after the firing of the glass plate 1.

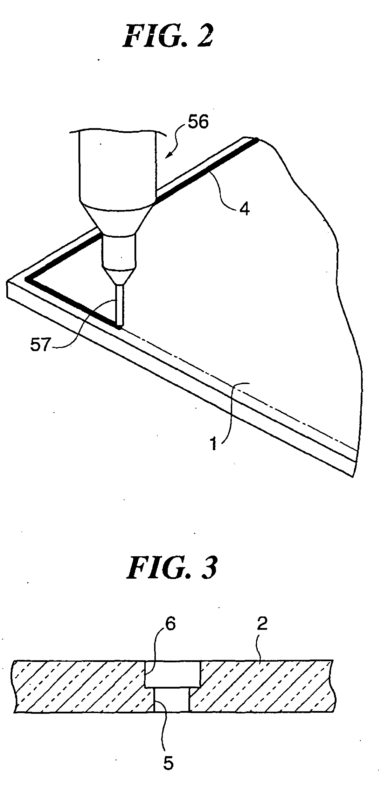

Next, as shown in FIG. 2, a sealing glass paste 4 containing low-melting-point glass frit is linearly applied onto the outer peripheral edge on the inner surface of the glass plate 1 formed thereon with the protrusions 3, using a dispenser 56 having an injection port 57 with an inner diameter of 1.0 to 2.0 mm. The glass paste 4 and the glass paste 52 need not necessarily be identical, but they may be selected according to the respective purposes of use. For example, it is preferable that the glass paste 52 is black and has a melting temperature that allows firing in the tempering process for tempering the glass plates 1 and 2, described in detail hereinafter with reference to FIG. 9, while as the glass paste 4, a glass paste is selected which has approximately the same thermal expansion coefficient as that of the glass plates 1 and 2 and can be fired at a lower temperature than the glass paste 52. Further, it is preferable that the dielectric loss factor of the glass paste 4 with respect to a high-frequency wave irradiated from a gyrotron, described in detail with reference to FIG. 9, is larger than that of the glass plates 1 and 2 so as to cause the glass paste 4 to be heated to a higher temperature than the glass plates 1 and 2 when the high-frequency wave is irradiated from the gyrotron. In the case where a laser beam or a light beam is used to heat the glass paste 4 in place of the high-frequency wave, it is preferable that to cause the glass paste 4 to be heated to a higher temperature than the glass plates 1 and 2, the glass paste 4 has a composition providing a higher absorption index with respect to the laser beam or the light beam than that of the glass plates 1 and 2, for example, it has a block color.

The method of applying the glass paste 4 is not limited to that using the dispenser 56, but a screen printing method may be employed, for example.

Next, as shown in FIG. 3, a through hole 5 having a predetermined radius is formed perpendicularly to one surface (outer surface) of the glass plate 2, and a counterbore 6 larger in radius than the through hole 5 is formed in a manner extending coaxially with the through hole 5 from the outer surface of the glass plate 2 to a predetermined depth. The counterbore 6 may have any radius insofar as it allows a glass tube 7, described below with reference to FIG. 4A, to be fitted in the counterbore 6, e.g. approximately 2 mm, and the radius of the through hole 5 is e.g. 1.5 mm.

Next, as shown in FIG. 4A, the glass tube 7 having a length of approximately 3 mm and an outer diameter of approximately 2 mm is inserted and fitted into the counterbore 6, and a glass solder 8 formed of hardening low-melting-point glass frit having an annular shape is placed on the outer surface of the glass plate 2 in a manner fitted on the glass tube 7 inserted in the counterbore 6. In the tempering process described in detail hereinbelow, the glass solder 8 is melted to join the glass plate 2 and the glass tube 7 to each other and at the same time seal between the counterbore 6 and the glass tube 7 (FIG. 4B).

In this way, a glass plate assembly 11 (FIG. 5) and a glass plate assembly 12 (FIGS. 6A and 6B) are formed, and then the glass plate assemblies 11 and 12 are subjected to the tempering process described below.

The glass plate assemblies 11 and 12 are tempered using a generally used horizontal tempering furnace in which glass plates are transferred by rollers. In the tempering process by the horizontal tempering furnace, the glass plate assemblies 11 and 2 are conveyed with the inner surface of the glass plate 1 facing upward and the outer surface of the glass plate 12 facing upward, so as to prevent the protrusions 3 and glass paste 4 of the glass plate assembly 11 and the glass tube 7 of the glass plate assembly 12 from coming into contact with component parts of the horizontal tempering furnace.

The glass plate assemblies 11 and 12 are heated to a temperature close to a softening temperature of the glass plates 1 and 2 during transfer in the horizontal tempering furnace, and then immediately quenched by wind, whereby, as shown in FIG. 7, the glass plate 1 is thermally tempered into a thermally tempered glass plate 14; the protrusions 3 and the glass paste 4 are melted and then solidified into solid glass; the protrusions 3 turn into protrusions 15 joined to the thermally tempered glass plate 14; the glass paste 4 turns into a linear protrusion 16 joined to the thermally tempered glass plate 14; and the glass plate assembly 11 turns into a thermally tempered glass plate assembly 13. On the other hand, as shown in FIGS. 8A and 8B, the glass plate 2 turns into a thermally tempered glass plate 18; the glass solder 8 is melted and then solidified into solid glass to form a sealing part 19 for joining the glass tube 7 to the thermally tempered glass plate 18 and sealing between them; and the glass plate assembly 12 turns into a thermally tempered glass plate assembly 17. Organic substances contained in the glass paste of each of the protrusions 3, the glass pastes 4, and the glass solder 8 are decomposed and oxidized in the course of melting to be removed as gases.

In the above-described tempering process, the thermally tempered glass plates 14 and 18 are warped due to the glass paste 4 applied to the outer peripheral edge of the glass plate 1, or undulated (roller-waved) due to the roller transfer, which makes the surfaces of the thermally tempered glass plates 14 and 18 uneven.

When the thermally tempered glass plate assemblies 13 and 17 are joined to each other, and the internal space is evacuated, as described in detail hereinafter, the thermally tempered glass plate assemblies 13 and 17 are drawn toward each other due to differential air pressure, whereby the unevenness of the surfaces of the thermally tempered glass plates 14 and 18 is corrected to some degree. Further, if the thermally tempered glass plates 14 and 18 are thin, they are apt to be elastically deformed in the vacuum glass panel 30, described in detail hereinafter with reference to FIGS. 12A and 12B, by differential air pressure, so that the unevenness of the surfaces of the thermally tempered glass plates 14 and 18 is easily corrected, whereas if the thermally tempered glass plates 14 and 18 are thick, they are hardly elastically deformed in the vacuum glass panel 30 by.differential air pressure, so that the unevenness of the surfaces of the thermally tempered glass plates 14 and 18 is hard to be corrected, which sometime leads to warpage or undulation of the thermally tempered glass plates 14 and 18 in the vacuum glass panel 30.

Significant warpage or undulation of the thermally tempered glass plates 14 and 18 increases unevenness in the space between the thermally tempered glass plates 14 and 18 in the vacuum glass panel 30, described in detail hereinafter with reference to FIGS. 12A and 12B, which can cause application of excessively large pressure to some of the protrusions 15 and damage to these protrusions 15. Further, there is a fear of some of the protrusions 15 being kept from contact with the thermally tempered glass plate 18, and hence unevenness on the thermally tempered glass plates 14 and 18 is not desirable to the vacuum glass panel 30. Therefore, in the above-described tempering process, it is desirable that warpage and undulation of the thermally tempered glass plates 14 and 18 are minimized.

Next, a joining process for joining the thermally tempered glass plate assemblies 13 and 17 is carried out as below.

In the joining process for joining the thermally tempered glass plate assemblies 13 and 17, as shown in FIG. 9, the thermally tempered glass plate assemblies 13 and 17 are superposed one upon the other such that the inner surfaces thereof are opposed to each other and the outer peripheral edges thereof are aligned with each other, and are placed on a horizontal panel support 58, with the outer surface of the thermally tempered glass plate assembly 13 facing downward. Then, the whole of the superposed thermally tempered glass plate assemblies 13 and 17 is heated to a predetermined temperature of e.g. 150 °C or higher, preferably to a range of 200 to 300 °C, by a known method. Then, the outer peripheral edges of the superposed thermally tempered glass plate assemblies 13 and 17 are locally heated by an irradiation device 59 disposed above the panel support 58, for irradiation of high-frequency light toward the panel support 58, to thereby melt the linear protrusion 16 again, and then the molten linear protrusion 16 is cooled until it is solidified again, whereby the thermally tempered glass plate assemblies 13 and 17 are joined to each other.

When only the outer peripheral edges of the thermally tempered glass plate assemblies 13 and 17 are thus locally heated to a high temperature, temperature distributions on the respective thermally tempered glass plates 14 and 18 become large, and the thermally tempered glass plates 14 and 18 are apt to be damaged at the outer peripheral edges thereof due to thermal stress. However, since the central portions of the respective thermally tempered glass plates 14 and 18 are heated, the temperature difference is reduced, and the risk of damage to the thermally tempered glass plates 14 and 18 is reduced.

Further, during the local heating of the outer peripheral edges of the thermally tempered glass plate assemblies 13 and 17 by the irradiation device 59, the outer peripheral edges of the thermally tempered glass plate assemblies 13 and 17 are cooled using nozzles 60 connected to a compressor, not shown, as described in detail hereinafter. This air cooling by the nozzles 60 makes it possible not only to prevent degradation of residual stress due to tempering in the outer peripheral edges of the thermally tempered glass plate assemblies 13 and 17, but also to prevent thermal deformation of the same.

The local heating of the outer peripheral edges of the thermally tempered glass plate assemblies 13 and 17 is carried out using a high-frequency wave oscillated by the gyrotron. The local heating of the outer peripheral edges of the thermally tempered glass plate assemblies 13 and 17 by the gyrotron makes it possible to melt only the linear protrusion 16 while preventing the thermally tempered glass plates 14 and 18 from being melted.

The gyrotron is a kind of high-frequency dielectric heating device, and the wavelength of the high-frequency wave oscillated by the gyrotron is in a range of several millimeters to several tens of millimeters. As described hereinabove, if the dielectric loss factor of the linear protrusion 16, i.e. the dielectric loss factor of the glass paste 4, in this wavelength range is larger than that of the thermally tempered glass plates 14 and 18, the rate of rise in the temperature of the linear protrusion 16 increases. Therefore, the radio wave oscillated by the gyrotron is allowed to selectively heat the linear protrusion 16 separately from the thermally tempered glass plate assemblies 13 and 17.

The irradiation device 59 is not limited to the gyrotron described above, but other kinds of devices capable of irradiating a high-frequency wave may be employed. In this case, the dielectric loss factor of the linear protrusion 16 (glass paste 4) in the wavelength range of the frequency wave for irradiation is set to be larger than that of the thermally tempered glass plates 14 and 18, whereby the linear protrusion 16 can be selectively heated separately from the thermally tempered glass plate assemblies 13 and 17. Alternatively, light produced by a YAG laser or a xenon lamp may be used. In this case, the irradiation light has a wavelength at which the light easily passes through soda glass, so that by mixing a substance having the property of absorbing the irradiation light with the wavelength into the glass paste 4, it is possible to selectively heat the linear protrusion 16 separately from the thermally tempered glass plate assemblies 13 and 17.

The thermal expansion coefficient of the linear protrusion 16 needs to be identical or approximate to that of the thermally tempered glass plates 14 and 18, and it is preferable that the difference between the thermal expansion coefficient of the linear protrusion 16 and that of the thermally tempered glass plates 14 and 18 is not larger than 1.0 x 1/ (10⁶ x K) at 0 to 500 °C.

Since the protrusions 15 as the spacers are joined to the inner surface of the thermally tempered glass plate 14, displacement of the spacers cannot occur, and therefore it is not necessary to place the thermally tempered glass plate assemblies 13 and 17 in an exactly horizontal position. However, if the thermally tempered glass plate assemblies 13 and 17 are joined to each other by the linear protrusion 16 in a state angled relative to each other, torsional residual stress is generated in the thermally tempered glass plates 14 and 18 in the vacuum glass panel 30, described in detail hereinafter with reference to FIGS. 12A and 12B, and hence the panel support 58 needs to be placed in a position horizontal to some extent.

When the thermally tempered glass plates 14 and 18 are preserved at room temperature after the tempering process, gases, e.g. of water (H₂O) and carbon dioxide (CO₂) in the atmosphere, having polarity are absorbed by the surfaces of the thermally tempered glass plates 14 and 18, whereby a layer having the gases adsorbed therein with a very high adsorption strength and a layer having the gases adsorbed therein with a low adsorption strength are formed. The major portion of the absorbed gases is water. Even in a vacuum, it takes long time to remove the gases from the surfaces of the thermally tempered glass plates 14 and 18 when the gases are adsorbed therein with a low adsorption strength.

If the adsorbed gases are not removed, the gases are desorbed in the vacuum glass panel 30, described in detail hereinafter with reference to FIGS. 12A and 12B, to cause degradation of the vacuum degree (increase in pressure) of a hollow layer 31 within the vacuum glass panel 30, and therefore the gases adsorbed in the thermally tempered glass plates 14 and 18 have to be removed.

As the thermally tempered glass plates 14 and 18 are heated under atmospheric pressure while progressively raising the heating temperature, desorption of water, which forms the major portion of the adsorbed gases, from the surfaces of the thermally tempered glass plates 14 and 18 starts at approximately 100 °C and becomes intense at 150 to 200 °C, and the water is almost all desorbed at 300 °C. Therefore, it is of a key importance to heat the thermally tempered glass plates 14 and 18 in their entirety to a predetermined temperature as described above.

In addition to heating of the thermally tempered glass plates 14 and 18 in their entirety as described above, a suitable getter is filled in the hollow layer 31 of the vacuum glass panel 30, described in detail hereinafter with reference to FIGS. 12A and 12B, whereby the getter absorbs the gases desorbed in the hollow layer 31, which enables the degree of vacuum in the hollow layer 31 to be maintained. However, an activation step needs to be executed after filling of the getter, resulting in an increase in the number of processing steps.

Further, the heating of the thermally tempered glass plates 14 and 18 in their entirety to the predetermined temperature provides advantageous effects in preventing thermal cracking of the thermally tempered glass plates 14 and 18 and reducing residual stress. In general, when a glass plate is partially heated, the glass plate will have a temperature distribution on the surface thereof. In the glass plate with this temperature distribution, a high-temperature portion tends to expand, but a low-temperature portion restrains the high-temperature portion from expanding freely. As a result, plane compressive stress is temporarily generated in the high-temperature portion, while in the low-temperature portion, plane tensile stress is temporarily generated due to expansion of the high-temperature portion. Glass is resistant to a compressive force, but not resistant to a tensile force, and hence a partially heated glass plate is generally broken at a low-temperature portion thereof.

When the thermally tempered glass plates 14 and 18 have central portions thereof heated to a range of 200 to 300°C and the outer peripheral edges thereof heated to approximately 500 °C, plane compressive stress is generated in the outer peripheral edges of the thermally tempered glass plates 14 and 18.

A reaction force of the plane compressive stress generated in the outer peripheral edge of the glass plate causes plane tensile stress in the central portion of the same. The surface strength of the glass plate is inherently high, which prevents the plane tensile stress from causing damage to the central portion of the glass plate. However, the inner peripheral surface of each of the through hole 5 and counterbore 6 in the thermally tempered glass plate 18, which are located where the plane tensile stress is generated, is a collection of fine flaws, and hence the strength thereof is low. Therefore, there is a high possibility that breakage due to the local heating of the outer peripheral edge occurs starting from the through hole 5 and the counterbore 6 (FIG. 10).

However, in the local heating of the thermally tempered glass plate assemblies 13 and 17 by the gyrotron, the through hole 5 and counterbore 6 of the thermally tempered glass plate 18 are also heated, which makes it possible to prevent generation of plane tensile stress large enough to cause the breakage of the through hole 5 and the counterbore 6.

The through hole 5 and the counterbore 6 need not be heated to so high a temperature as that to which the outer peripheral edge is heated, and hence breakage thereof can be prevented only by heating them to a temperature approximately 100 °C higher than a temperature to which the central portion of the surface of the thermally tempered glass plate 18 is heated.

When the whole of the thermally tempered glass plate assemblies 13 and 17 joined to each other as described above is cooled to room temperature, residual stress due to the local heating by the gyrotron is generated within the thermally tempered glass plates 14 and 18. This residual stress is generated according to the temperature distribution within each of the thermally tempered glass plates 14 and 18 when the linear protrusion 16 is solidified.

So long as the thermally tempered glass plates 14 and 18 are elastic members, when they thermally expand with a temperature distribution, they are deformed, and when the outer peripheral edges are at a high temperature, the thermally tempered glass plates 14 and 18 are deformed into a saddle shape. The saddle shape can assume two stable forms which are inverted in the arrangement of recessed portions and protruded portions to each other, and when the temperature of the thermally tempered glass plates 14 and 18 returns to room temperature, they return from the saddle shape to its stable original flat plate shape. However, when the outer peripheral edges of the thermally tempered glass plates 14 and 18 thermally expand at a temperature range within which they are plastic, the thermally tempered glass plates 14 and 18 are plastically deformed, and thermal stress is relaxed to some degree. As a result, even when the temperature of the thermally tempered glass plates 14 and 18 returns to room temperature, the thermally tempered glass plates 14 and 18 cannot return to their original flat plate shapes, and hence residual stress is generated in the thermally tempered glass plates 14 and 18.

To prevent deformation of the thermally tempered glass plates 14 and 18 and generation of residual stress therein in the vacuum glass panel 30, described in detail hereinafter with reference to FIGS. 12A and 12B, it is necessary to minimize relaxation of thermal stress in the thermally tempered glass plates 14 and 18. A time period and temperature applied to heating by the gyrotron in the process of joining the thermally tempered glass plates 14 and 18 by the linear protrusion 16 have to be regarded not only as affecting degradation of strength of the thermally tempered glass plates 14 and 18, but also as affecting deformation of the thermally tempered glass plates 14 and 18 and generation of residual stress.

The magnitude of the residual stress is related to temperature distribution in the heated thermally tempered glass plates 14 and 18, particularly to the difference between the highest temperature and the lowest temperature therein, and the larger the difference, the larger the residual stress. As the thermally tempered glass plates 14 and 18 are larger in size, the large plane residual stress is more likely to be generated, and hence the higher the possibility of breakage is.

Further, if the temperature distributions of the respective thermally tempered glass plates 14 and 18 are equal to each other, when the thermally tempered glass plates 14 and 18 joined to each other are cooled to room temperature, the amounts of thermal shrinkage of the corresponding portions of the thermally tempered glass plates 14 and 18 are equal to each other, so that residual stress is not generated by interaction of forces between the thermally tempered glass plates 14 and 18. However, if the thermally tempered glass plates 14 and 18 are joined to each other with the outer peripheral edge of one of them being heated to a high temperature, when the thermally tempered glass plates 14 and 18 are cooled to room temperature, they are warped due to the difference between the amounts of thermal shrinkage of the peripheral edges thereof, which produces residual stress. For this reason, it is necessary to equalize the temperatures to which the respective outer peripheral edges of the thermally tempered glass plates 14 and 18 are heated for joining them, or to minimize the difference between the heating temperatures.

Cooling of the outer peripheral edges of the thermally tempered glass plate assemblies 13 and 17 after the local heating thereof by the gyrotron is carried out by blowing compressed air from the nozzles 60 against the outer surfaces of the respective outer peripheral edges of the thermally tempered glass plate assemblies 13 and 17 while drawing in surrounding air. This makes it possible to heat the linear protrusion 16 to a high temperature allowing remelting of the linear protrusion 16 while suppressing an increase in the temperature of the outer surfaces of the respective outer peripheral edges of the thermally tempered glass plates 14 and 18 forming the vacuum glass panel 30 described in detail hereinafter with reference to FIGS. 12A and 12B. Further, it is possible to minimize the temperature difference caused between the outer peripheral edge and the inner portion of each of the thermally tempered glass plates 14 and 18 during the heating thereof by the gyrotron, thereby reducing residual stress generated in the thermally tempered glass plates 14 and 18.

When the linear protrusion 16 is selectively heated using the gyrotron as described above, heat is conducted from the linear protrusion 16 to the thermally tempered glass plates 14 and 18 as the temperature of the linear protrusion 16 becomes higher, so that the outer peripheral edges of the thermally tempered glass plates 14 and 18 are heated to a high temperature. When the temperatures of the respective outer peripheral edges of the thermally tempered glass plates 14 and 18 become high, section residual stress in each of the thermally tempered glass plates 14 and 18 is progressively reduced, and the in-plate temperature difference between the central portion of each of the thermally tempered glass plates 14 and 18 and the outer peripheral edge thereof increases. As a result, the thermally tempered glass plates 14 and 18 are deformed as described above, which is one of factors generating residual stress. The same is the case when a different kind of high-frequency wave irradiation device, a YAG laser, or a xenon lamp is used in place of the gyrotron.

Further, the high-frequency wave irradiated from the gyrotron onto the thermally tempered glass plates 14 and 18 does not fully pass through the thermally tempered glass plates 14 and 18. When the linear protrusion 16 is selectively heated from the thermally tempered glass plate 18 side by the gyrotron, the thermally tempered glass plate 18 becomes hotter than the thermally tempered glass plate 14, and the joined thermally tempered glass plates 14 and 18 of the vacuum glass panel 30, described in detail hereinafter with reference to FIGS. 12A and 12B, are deformed due to the difference in the amount of thermal shrinkage, as described above, which is one of the factors generating residual stress. The same is the case when a different kind of high-frequency wave irradiation device, a YAG laser, or a xenon lamp is used in place of the gyrotron.

However, during the local heating by the gyrotron, compressed air is blown from the nozzles 60 against the thermally tempered glass plates 14 and 18, as described above, to cool the same while drawing in surrounding air, and hence, even when the temperature of the linear protrusion 16 rises, it is possible to prevent a rise in the temperature of the outer peripheral edges of the glass plates 14 and 18. Further, the thermally tempered glass plate 18 heated to the high temperature by irradiation of a high-frequency wave from the gyrotron is further cooled by the nozzles 60 to a greater extent than the thermally tempered glass plate 14 which is lower in temperature than the thermally tempered glass plate 18, and hence the temperature difference between the outer peripheral edges of the thermally tempered glass plates 14 and 18 can be reduced.

The method of cooling the outer peripheral edges of the thermally tempered glass plate assemblies 13 and 17 during the local heating thereof by the gyrotron is not limited to blowing of compressed air from the nozzles 60, but other methods may be employed for the cooling.

Next, air within the hollow layer 31 defined between the thermally tempered glass plate assemblies 13 and 17 joined by the linear protrusion 16 is exhausted via the glass tube 7 of the joined thermally tempered glass plate assemblies 13 and 17 so as to evacuate the hollow layer 31. Then, the outside air-side end of the glass tube 7 is completely sealed, and a protector 20 is mounted onto the glass tube 7, whereby the vacuum glass panel 30 is completed (FIGS. 12A and 12B).

The air within the hollow layer 31 is exhausted before the temperature of the thermally tempered glass plates 14 and 18 joined by the linear protrusion 16 becomes not higher than 80°C, by mounting an evacuation cup 61 on the outer surface of the thermally tempered glass plate assembly 17 in a manner covering the glass tube 7, as shown in FIG. 11A, and exhausting air from the hollow layer 31 to evacuate the same. Then, a heater 62 attached to the evacuation cup 61 is energized to heat the outside air-side end of the glass tube 7 to a high temperature, whereby the outside air-side end of the glass tube 7 is melted to completely seal the glass tube 7 (FIG. 11B) .

The reason why the evacuation is performed before the temperature of the thermally tempered glass plates 14 and 18 becomes not higher than 80°C is that it is necessary to prevent absorption of water and the like by the thermally tempered glass plates 14 and 18.

The method of exhausting air from the hollow layer 31 is not limited to the above-described method using the evacuation cup 61. Alternatively, for example, the preheating and local heating of the superposed thermally tempered glass plate assemblies 13 and 17 are performed within a vacuum chamber which is evacuated inside, and then the thermally tempered glass plate assemblies 13 and 17 are subjected to radiation cooling after remelting of the linear protrusion 16 by selective heating using the gyrotron. Consequently, the hollow layer 31 is evacuated to cause the thermally tempered glass plate assemblies 13 and 17 to be joined to each other, whereby the vacuum glass panel 30 is completed. According to this method, however, remelting of the linear protrusion 16 in vacuum causes gases contained in the linear protrusion 16 to vigorously foam. Besides, if gases remain in the linear protrusion 16, the thermally tempered glass plate assemblies 13 and 17 cannot be completely joined. Therefore, it is necessary to melt the linear protrusion 16 slowly over a sufficient period of time so as to fully defoam the internal gases.

According to the vacuum glass panel manufacturing method of the above-described embodiment of the present invention, the protrusions 3 formed in a matrix shape on the inner surface of the glass plate 1 are melted during the tempering process for tempering the glass plate 1, to thereby form the protrusions 15 joined to the inner surface of the thermally tempered glass plate 14. As a result, even if the space in the hollow layer 31 of the vacuum glass panel 30 is made non-uniform due to warpage or undulation of the thermally tempered glass plates 14 and 18 caused during the tempering process or during the joining process for joining the thermally tempered glass plate assemblies 13 and 17, it is possible to prevent displacement of the protrusions 15 as support members in the hollow layer 31.

Although in the vacuum glass panel manufacturing method according to the above-described embodiment, the tempering process for the glass plates 1 and 2 is carried out using the horizontal tempering furnace, this is not limitative, but other apparatuses may be used. Further, the tempering process for the glass plates 1 and 2 is not limited to thermal processing, but the glass plates 1 and 2 may be tempered by a chemical tempering process based on chemical processing.

### Industrial Applicability

As described in detail heretofore, according to the vacuum glass panel manufacturing method of the present invention, a plurality of protrusions are formed as spacers on the inner surface of at least one of a pair of glass plates, and a low-melting-point glass layer whose melting temperature is lower than that of the pair of glass plates is melted at the outer peripheral edges of the pair of glass plates to thereby hermetically seal the outer peripheral edges of the pair of glass plates. As a result, it is possible to join the pair of glass plates while suppressing deformation of the pair of glass plates and suppressing degradation of the strength of the pair of glass plates. Further, it is possible to prevent displacement of the spacers.

According to the vacuum glass panel manufacturing method of the present invention, since the low-melting-point glass layer is melted by local heating using microwave to thereby hermetically seal the outer peripheral edges of the pair of glass plates, the local heating of the low-melting-point glass layer can be efficiently performed.

According to the vacuum glass panel manufacturing method of the present invention, since the dielectric loss factor of the low-melting-point glass layer in the wavelength range of the microwave is larger than that of the pair of glass plates, it is possible to more efficiently perform the local heating of the low-melting-point glass layer.

According to the vacuum glass panel manufacturing method of the present invention, since the low-melting-point glass layer is melted by local heating using a laser beam to thereby hermetically seal the outer peripheral edges of the pair of glass plates, the local heating of the low-melting-point glass layer can be efficiently performed.

According to the vacuum glass panel manufacturing method of the present invention, since the low-melting-point glass layer is melted by local heating using a light beam to thereby hermetically seal the outer peripheral edges of the pair of glass plates, the local heating of the low-melting-point glass layer can be efficiently performed.

According to the vacuum glass panel manufacturing method of the present invention, since the light absorption index of the low-melting-point glass layer is larger than that of the pair of glass plates, in the wavelength range of light for local heating, it is possible to more efficiently perform the local heating of the low-melting-point glass layer.

According to the vacuum glass panel manufacturing method of the present invention, since the pair of glass plates are heated in their entirety to a predetermined temperature before local heating of the low-melting-point glass layer is performed, it is possible to suppress degradation of the vacuum degree of the hollow layer in the vacuum glass panel.

According to the vacuum glass panel manufacturing method of the present invention, since the outer peripheral edges of the pair of glass plates are cooled during the local heating of the low-melting-point glass layer, it is possible to further suppress deformation of the pair of glass plates and further suppress degradation of the strength of the pair of glass plates when the pair of glass plates are jointed to each other.

According to the vacuum glass panel manufacturing method of the present invention, a through hole for evacuation is locally heated during the local heating of the outer peripheral edges of the pair of glass plates, degradation of the strength of the inner surface of the through hole can be suppressed.

According to the vacuum glass panel manufacturing method of the present invention, the evacuation is performed before the temperature of the pair of glass plates becomes not higher than 80 °C after the sealing of the outer peripheral edges, so that absorption of water and the like on the pair of glass plates can be suppressed, which makes it possible to suppress degradation of the vacuum degree of the hollow layer in the vacuum glass panel due to desorption of water and the like absorbed on the pair of glass plates.

According to the vacuum glass panel manufacturing method of the present invention, the difference between the coefficient of linear expansion of the low-melting-point glass layer and that of the pair of glass plates is in a range of 1.0 x 1 / (10⁶ x K) at 0 to 500°C. This makes it possible to further suppress deformation of the pair of glass plates in joining thereof.

According to the vacuum glass panel manufacturing method of the present invention, a plurality of protrusions as spacers are formed integrally with one of the pair of glass plates by heating low-melting-point glass paste applied in a matrix shape onto the inner surface of the one of the pair of glass plates, so that displacement of the spacers can be reliably prevented.

## Claims

1. A method of manufacturing a vacuum glass panel, in which respective outer peripheral edges of a pair of glass plates opposed to each other via spacers are hermetically sealed, and an internal space within the pair of glass plates having the respective outer peripheral edges hermetically sealed is evacuated, comprising:
a protrusion forming step of forming a plurality of protrusions as the spacers on an inner surface of at least one of the pair of glass plates; and
a sealing step of hermetically sealing the outer peripheral edges of the pair of glass plates by melting a low-melting-point glass layer whose melting temperature is lower than a melting temperature of the pair of glass plates, at the outer peripheral edges of the pair of glass plates.

2. A vacuum glass panel manufacturing method as claimed in claim 1, wherein at least one of the pair of glass plates is formed of tempered glass.

3. A vacuum glass panel manufacturing method as claimed in claim 1, wherein said sealing step comprises melting the low-melting-point glass layer by local heating using microwave.

4. A vacuum glass panel manufacturing method as claimed in claim 3, wherein the low-melting-point glass layer has a dielectric loss factor larger than a dielectric loss factor of the pair of glass plates, in a wavelength range of the microwave.

5. A vacuum glass panel manufacturing method as claimed in claim 3, wherein the microwave is oscillated by a gyrotron.

6. A vacuum glass panel manufacturing method as claimed in claim 1, wherein said sealing step comprises melting the low-melting-point glass layer by local heating using a laser beam.

7. A vacuum glass panel manufacturing method as claimed in claim 1, wherein said sealing step comprises melting the low-melting-point glass layer by local heating using a light beam.

8. A vacuum glass panel manufacturing method as claimed in claim 6, wherein the low-melting-point glass layer has a light absorption index larger than a light absorption index of the pair of glass plates, in a wavelength range of the laser beam.

9. A vacuum glass panel manufacturing method as claimed in claim 3, wherein the pair of glass plates are heated in their entirety to a predetermined temperature before the local heating of the low-melting-point glass layer is performed.

10. A vacuum glass panel manufacturing method as claimed in claim 9, wherein the predetermined temperature is not lower than 150 °C.

11. A vacuum glass panel manufacturing method as claimed in claim 10, wherein the predetermined temperature is 200 to 300 °C.

12. A vacuum glass panel manufacturing method as claimed in claim 3, wherein the outer peripheral edges of the pair of glass plates are cooled during the local heating of the low-melting-point glass layer.

13. A vacuum glass panel manufacturing method as claimed in claim 12, wherein the outer peripheral edges of the pair of glass plates are forcibly cooled by air.

14. A vacuum glass panel manufacturing method as claimed in claim 3, wherein a through hole is formed in one of the pair of glass plates, for evacuation, and the through hole is locally heated during the local heating of the outer peripheral edges of the pair of glass plates.

15. A vacuum glass panel manufacturing method as claimed in claim 3, wherein the evacuation is performed before a temperature of the pair of glass plates becomes not higher than 80 °C after the outer peripheral edges are hermetically sealed.

16. A vacuum glass panel manufacturing method as claimed in claim 1, comprising a low-melting-point glass layer forming step of forming the low-melting-point glass layer by applying glass paste onto an outer peripheral edge of an inner surface of one of the pair of glass plates and heating the applied glass paste.

17. A vacuum glass panel manufacturing method as claimed in claim 16, wherein the one of the pair of glass plates having the glass paste applied thereto is formed of a glass other than tempered glass, and said low-melting-point glass layer forming step comprises subjecting the one of the pair of glass plates to thermal tempering to form the low-melting-point glass layer.

18. A vacuum glass panel manufacturing method as claimed in claim 1, wherein a difference between a coefficient of linear expansion of the low-melting-point glass layer and a coefficient of linear expansion of the pair of glass plates is in a range of 1.0 x 1/ (10⁶ x K) at 0 to 500°C.

19. A vacuum glass panel manufacturing method as claimed in claim 1, wherein said protrusion forming step comprises applying low-melting-point glass paste in a matrix shape onto an inner surface of one of the pair of glass plates, and heating the applied low-melting-point glass paste to thereby cause the low-melting-point glass paste to be integrated with the one of the pair of glass plates.

20. A vacuum glass panel manufacturing method as claimed in claim 19, wherein the low-melting-point glass paste is applied by a screen printing method.

21. A vacuum glass panel manufacturing method as claimed in claim 19, wherein the low-melting-point glass paste is applied using a dispenser.

22. A vacuum glass panel manufacturing method as claimed in claim 19, wherein the low-melting-point glass paste is applied by transfer using a plurality of needles.

23. A vacuum glass panel manufacturing method as claimed in claim 19, wherein the one of the pair of glass plates having the low-melting-point glass paste applied thereto is formed of a glass other than tempered glass, and said protrusion forming step comprises subjecting the one of the pair of glass plates to thermal tempering.

24. A vacuum glass panel manufacturing method as claimed in claim 19, wherein the low-melting-point glass paste contains low-melting-point glass whose softening temperature is lower than a softening temperature of the pair of glass plates.

25. A vacuum glass panel manufacturing method as claimed in claim 2, wherein the tempered glass is thermally tempered glass.

26. A vacuum glass panel manufacturing method as claimed in claim 2, wherein the tempered glass is chemically tempered glass.

27. A vacuum glass panel manufactured by the vacuum glass panel manufacturing method claimed in any of claims 1 to 26.
